# EUROPÄISCHE PATENTSCHRIFT

(11) **EP 0 611 608 B1**
(45) Veröffentlichungstag und Bekanntmachung des Hinweises auf die Patenterteilung: **11.12.1996**
(21) Anmeldenummer: 94250032.3
(22) Anmeldetag: 15.02.1994
(51) Int. Cl.: B05C 11/10, G01N 21/89, G01N 21/88

(54) **Verfahren und Vorrichtung zum Abtasten und Überprüfen von Spurauftragungen auf einer Unterlage**
Method and device for scanning and checking of tracks applied to a substrate
Méthode et dispositif pour balayer et contrôler l'application d'une trace sur un support

(30) Priorität: 16.02.1993 DE 4304678
(43) Veröffentlichungstag der Anmeldung: 24.08.1994
(73) Patentinhaber: SYSTEM KURANDT GmbH, D-12351 Berlin (DE)
(72) Erfinder: Kurandt, Fritz, D-12249 Berlin (DE)
(74) Vertreter: Pfenning, Meinig & Partner

(56) Entgegenhaltungen:
- EP-A- 0 314 012
- US-A- 4 215 939
- PATENT ABSTRACTS OF JAPAN vol. 4, no. 172 (P-38) (654) 27. November 1980 & JP-A-55 117 945 (FUJITSU) 10. September 1980
- PATENT ABSTRACTS OF JAPAN vol. 5, no. 196 (P-93) (868) 12. Dezember 1981 & JP-A-56 118 647 (HITACHI SEISAKUSHO) 17. September 1981

## Beschreibung

Die Erfindung bezieht sich auf ein Verfahren zum Abtasten und Überprüfen von Spurauftragungen auf einer Unterlage oder dergleichen Objekt, beispielsweise einer oder mehrerer Leimspuren auf einem zu faltenden Schachtelrohling, und auf eine Vorrichtung zur Durchführung des Verfahrens. Ein solches Verfahren ist z.B. aus der EP-A-314 012 bekannt.

Bei der unterschiedlich dosierbaren Massenfertigung von Lebensmitteln, Medikamenten und anderen Produkten aller Art ist deren sichere und funktionsgerechte Verpackung von wesentlicher Bedeutung. Sie muß nicht nur optisch fehlerfrei und ansprechend sein, sie muß das Produkt auch gegen äußere Beschädigungen und Einflüsse aller Art sicher schützen, wobei es bei den gegebenen sehr hohen Fertigungsgeschwindigkeiten auf exakte Reproduzierbarkeit bei geringstmöglicher Fehlerquote ankommt. Produktumhüllende Verpackungen, beispielsweise Kartonagen wie Pappschachteln für die pharmazeutische Industrie od.dgl., werden aus vorgestanzten ebenen Schachtelrohlingen durch Falten und Kleben hergestellt, wofür die Beleimung der Klebenähte in Form eines kontinuierlichen Spurauftrages oder einer Kette einzelner aneinandergereihter Beleimungspunkte über spezielle Düsenauftragungssysteme erfolgt. Für die sichere Vorgabe eines fehlerfreien Produktes ist die Zuverlässigkeit der Spurauftragung sowohl in Form einer programmgesteuerten Kette aus einzelnen Leim-Punkten als auch einer durchgehenden Leim-Linien oder -Rauten Grundvoraussetzung.

Leimauftragungssysteme unter Verwendung von Austragsdüsen, deren Öffnungsquerschnitt möglichst gering gehalten werden muß, neigen während des Betriebes aus einer Mehrzahl von Gründen zu Verstopfungen oder anderen Betriebsunterbrechungen und sind somit von Haus aus mit einer hohen Ausfallquote behaftet, was für den Gesamtfertigungsprozeß von großem Nachteil ist. Zur Vermeidung bzw. sicheren Früherkennung derartiger Unregelmäßigkeiten ist bei den gegebenen hohen Fertigungsgeschwindigkeiten eine Überwachung durch bloßen Augenschein des Betriebspersonals nicht mehr möglich, insbesondere nicht bezüglich der Aussage über das Vorhandensein oder Nichtvorhandensein oder auch nur einer kurzen Unterbrechung einer Leimspurauftragung, die sich optisch nicht von ihrer Unterlage unterscheidet. Dennoch ist nicht nur eine Aussage über das Vorhandensein oder Nichtvorhandensein einer Leimraute od.dgl. für die Qualität und die funktionelle Zuverlässigkeit des Produktes wichtig, sondern auch die Überwachung ihres präzisen Beginns und Endes, gegebenenfalls auch der aufgetragenen Menge.

Bisher erfolgt die Kontrolle und Überprüfung von Spurauftragungen, nämlich Leimspuren, aber auch anderen pastenförmigen oder mehr oder weniger flüssiger Substrate nach unterschiedlichen Verfahrensweisen.

Bei einer bekannten farbmetrischen Überwachung des Spurauftrages wird davon ausgegangen, daß dem Leim ein Farbstoff beigemischt ist, der unterschiedlich zur Farbgebung der Objektunterlage ist, so daß sich die Farbunterschiede als Kennungskriterien für das Vorhandensein bzw. Nichtvorhandensein der eingefärbten Leimspur heranziehen lassen. Nachteilig bei dieser Verfahrensweise ist zunächst die Farbgebung des Leimauftrages, die so vorgenommen werden muß, daß auch bei dünnen Objektunterlagen ein Durchschlagen des Farbtones ausgeschlossen ist. Nachteilig ist aber insbesondere auch, daß bei dieser Verfahrensweise nur einfarbige, möglichst weiße Unterlagen bezüglich der eingefärbten Spurauftragung sicher überwacht werden können. Bei farbig bedruckten Oberflächen sind fortwährende Fehlmessungen nicht auszuschließen bzw. ist diese Verfahrensweise nicht anwendbar. Entsprechendes gilt auch für Heißleimauftragungen.

Ein weiteres bekanntes Abtast- und Kontrollverfahren bedient sich der kapazitiven Überwachung. Hierbei wird der Leimauftrag entweder an zwei Kondensatorplatten herangeführt bzw. zwischen diesen oder zwei kapazitiven Leitern hindurchgeführt, an die ein hochfrequentes Wechselspannungsfeld gelegt ist. Das sich ändernde Dielektrikum beeinflußt entsprechend einen Hochfrequenz-Schwingkreis, dessen Teil die Kondensatoranordnung ist. Die Frequenzänderung des Schwingkreises wird meßtechnisch erfaßt und ähnlich wie bei Münzprüfgeräten ausgewertet (DE-OS 23 62 835).

Eine weitere Hochfrequenz-Meßmethode, die sich des Frequenzspektrums im Mikrowellenbereich bedient, ist für flächig aufzutragende, d.h. relativ dünnflüssige Leime vorgeschlagen worden, wobei sich diese Methode jedoch weder für Heißleimer noch für höher viskose Auftragungen eignet.

Schließlich soll hier noch auf ein Abtastverfahren hingewiesen werden, bei dem die Leimspur mit Ultraviolett-Licht beaufschlagt wird und die reflektierte Strahlung mittels Lumineszenz-Abtastern erfaßt wird. Dieses Abtastverfahren eignet sich jedoch nur für Dispersionsleime, denen UV-Aufheller zugesetzt sind, so daß hierfür die Einsatzmöglichkeiten äußerst beschränkt sind. Streustrahlung und Untergrundstrahlung führen zu hohen Schwankungen in der Meßwertkennung.

Der vorliegenden Erfindung liegt die Aufgabe zugrunde, ausgehend von einem Verfahren der eingangs genannten Art, die Aussatz- und/oder Fehlerquote bei der Herstellung von Spurauftragungen so zu minimieren, daß praktisch jeder im Fertigungsprozeß auftretende Fehler sicher erkannt und damit eliminiert werden kann, unabhängig von der Beschaffenheit oder Farbe der Objektunterlage, auf die die Spurauftragung erfolgt, und unabhängig von den optischen, physikalischen oder chemischen Eigenschaften der Spurauftragung selbst.

Die Lösung dieser Aufgabe wird verfahrensmäßig durch die im Kennzeichen des Anspruches 1 angegebenen Merkmale erreicht. Vorteilhafte Weiterbildungen und Ausgestaltungen dieses Verfahrens sind in den Unteransprüchen 2 bis 6 definiert.

Anspruch 7 kennzeichnet die Vorrichtung zur Durchführung des erfindungsgemäßen Verfahrens, und die sich daran anschließenden weiteren Unteransprüche kennzeichnen Einzelheiten der Ausgestaltung dieser Vorrichtung.

Die Verwendung eines Laserstrahles als Lichtquelle ist besonders vorteilhaft, da sich hierdurch nicht nur sehr genaue reproduzierbare Meßwerte ergeben, sondern sich auch unerwünschte Einflüsse sonstiger Umgebungsstrahlung ausschließen lassen. Besonders vorteilhaft ist in diesem Zusammenhang auch die senkrechte Ausrichtung der Haupteinstrahlrichtung der Empfängeranordnung zum Auflicht-Laserstrahl oder doch wenigstens eine im ausreichenden Winkel hierzu stehende Ausrichtung, damit die Strahlung des Auflichtes die zur Empfängeranordnung hin gerichtete Reflexionsstrahlung der Spurauftragung nicht beeinflußt. Die Abtastung der Spurauftragung erfolgt praktisch trägheitslos, wobei durch die periodische Ablenkung des Lichtstrahles mit hoher Frequenz sich auf der Objektunterlage eine beidseitig begrenzte sehr dünne Lichtlinie abbildet, die quer über die eine oder mehrere Spurauftragungen verläuft, und zwar vorzugsweise etwa senkrecht zur Linearbewegung der Spurauftragung.

Mit der Geschwindigkeit der Spurauftragung auf die Objektunterlage bewegt sich diese senkrecht zur Laserstrahllinie unter der Meßanordnung hindurch, so daß eine kontinuierliche Messung des Spurauftrages sichergestellt ist.

Der Aufbau der Vorrichtung zur Durchführung des erfindungsgemäßen Verfahrens ist dadurch einfach und relativ kompakt auszuführen. Die Vorrichtung besteht im bevorzugten Ausführungsbeispiel aus einer Laserlichtquelle, deren Licht, vorteilhaft mehrfach umgelenkt, derart hochfrequent periodisch abgelenkt wird, daß sich auf der Objektunterlage ein scharfer längenbegrenzter Lichtstrahl in Form einer hellen Linie abbildet, die von einer Empfängervorrichtung bezüglich des reflektierten Strahlenanteiles zu beiden Seiten des Spurauftrages sensoraktiv ist, so daß eine auch schaltungstechnisch wenig aufwendige Auswertelektronik in Anwendung gebracht werden kann.

Anhand der beiliegenden Zeichnungen soll die vorliegende Erfindung in schematisierter und beispielhafter Ausführungsform näher erläutert werden, wobei bedeuten:
- Fig.1: eine seitliche Draufsicht auf die Lichtquellen/Empfänger-Anordnung,
- Fig. 2: eine Teildarstellung gemäß Fig. 1,
- Fig. 3: eine Darstellung gemäß Fig. 2 unter Hinzufügung einer Leimspur,
- Fig. 4: ein Blockschaltbild der Abtast- und Auswerte-Elektronik, und
- Fig. 5: eine Darstellung zur Verdeutlichung des auszuwertenden Ausgangssignals der Abtastelektronik.

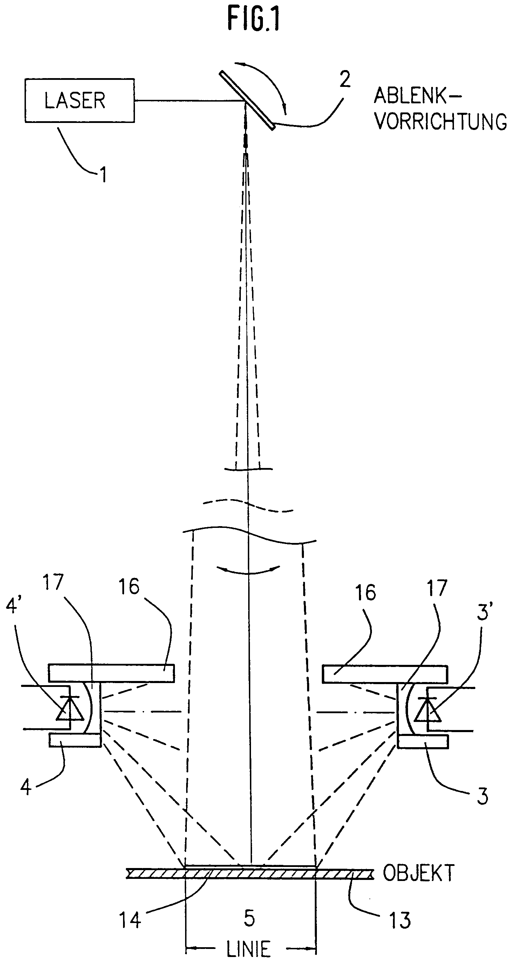

Bei der in Fig. 1 dargestellten Lichtquelle 1 handelt es sich um einen Laser, dessen hochenergetischer Lichtstrahl auf eine Spiegeloberfläche einer Ablenkvorrichtung 2 fällt, mit dem der Strahl um 90° umgelenkt wird, so daß er nachfolgend senkrecht nach unten geführt werden kann. Der Laserstrahl ist auf die Objektentfernung fokussiert, d.h. er bildet sich ohne Ablenkung auf der Oberfläche des Objektes 13 als scharf definierter Punkt ab.

Wie mit dem Doppelpfeil bei der Ablenkvorrichtung 2 angedeutet, schwingt diese periodisch mit hoher Frequenz derart hin und her, daß sich der im Querschnitt punktförmige Lichtstrahl in der Abbildungsebene als scharf begrenzte Linie 14 abbildet, deren Länge, den Erfassungsbereich 5 der Abtastung definierend, durch die Amplitude der periodischen Auslenkung der Ablenkvorrichtung 2 vorgegeben ist. Das Objekt 13 bewegt sich während der Messung senkrecht zur Zeichenebene, also in Richtung aus dieser heraus bzw. in diese hinein, mit einer Geschwindigkeit, die der Auftragsgeschwindigkeit einer hier nicht dargestellten Spurauftragung entspricht.

Die Ablenkvorrichtung 2 kann, wie dargestellt, ein schwingender Spiegel sein bzw. ein Polygon-Spiegel, ein Resonanz-Frequenzschwinger oder dergleichen dynamische Schwingvorrichtung, die den Lichtstrahl in einen Lichtkegel auffächert, dessen Ebene die Zeichenebene ist. Das bewegte Objekt 13 verzeichnet somit eine zickzackförmige Abtastung über seine Erfassungsbreite 5. Dem ruhenden Betrachter erscheint zufolge der hochfrequenten Ablenkung des Laserstrahles in der Zeichen- und Objektebene eine stehende scharf ausgeleuchtete Linie 14, wobei die Ablenkfrequenz der Ablenkvorrichtung 2 beispielsweise 1 kHz betragen kann.

Um den Kegelwinkel zwischen Ablenkvorrichtung 2 und Objekt 13 möglichst klein zu halten und damit eine möglichst gleichmäßige Ausleuchtung der Linie 14 bei gleicher Abtastgeschwindigkeit über ihre gesamte Länge zu erzielen und um die Meßanordnung möglichst klein zu dimensionieren und in einem kompakten Gehäuse unterbringen zu können, wird vorzugsweise der Laserstrahl über eine Mehrzahl von Umlenkvorrichtungen hin und her geführt, was bei geringem Abstand der einzelnen Vorrichtungseinheiten zueinander eine maximale Weglänge des Lichtstrahles ermöglicht. Der in der Zeichenebene aufgebündelte Lichtstrahl fällt somit senkrecht auf das Objekt 13, was annähernd auch an den beiden Enden der Linie 14 des Erfassungsbereiches 5 gesagt werden kann. Mit der Verlängerung des Weges zwischen Ablenkvorrichtung 2 und Oberfläche des Objektes 13 läßt sich eine hohe Tiefenschärfe auch bei relativ großen Niveau-Änderungen der Oberfläche im Erfassungsbereich 5 durch beispielsweise dicke Spurauftragungen eines Leimes vorgeben. Je länger der Abstand zwischen Ablenkvorrichtung 2 und Objekt 13, desto größer kann auch die Länge der Linie 14, also der Erfassungsbereich 5, gewählt werden trotz extrem spitzwinkligen, d. h. minimalen Auslenkwinkels des Scankegels.

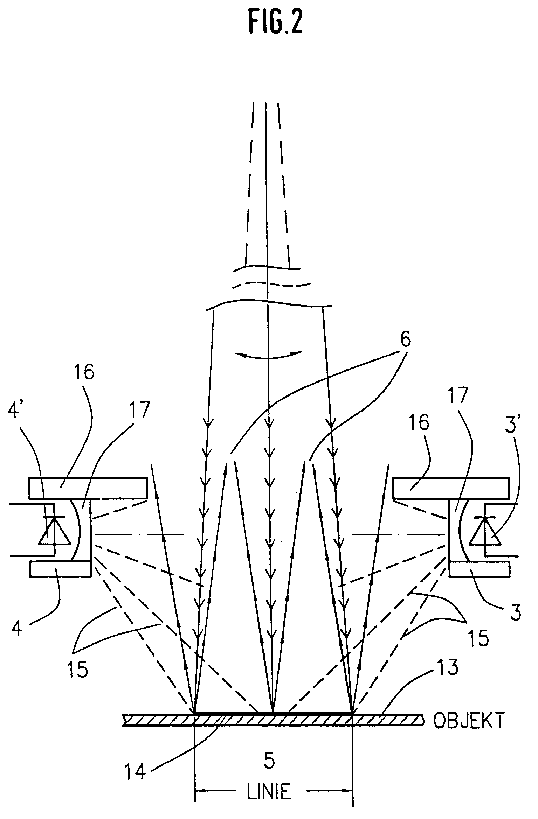

Durch die abtastende Bewegung des Laserstrahles entlang einer Linie der planen Objektoberfläche wird von dieser Oberfläche Strahlung reemittiert, wie das in Fig. 2 mit den Darstellungen gemäß Bezugszeichen 6 angedeutet ist, wobei die Intensität der reemittierten Strahlung durch die Oberflächenbeschaffenheit und die Untergrundfarbe des Objekts 14 erheblich beeinflußt ist. Es ist jedoch aus der schematischen Darstellung ersichtlich, daß die reemittierte Strahlung im wesentlichen in ihrem Einstrahlbereich verbleibend zurückgestrahlt wird, wobei nur vernachlässigbar geringe Streustrahlung in andere Richtungen fällt.

Wie aus Fig. 1 bis 3 weiter ersichtlich, sind in der Ebene des Scankegels oberhalb des Objektes 13 liegend zwei Photoempfänger in Stellung gebracht, die zusammen eine Empfängeranordnung 3, 4 bilden, wobei der eine Photoempfänger 4 auf der linken und der andere Photoempfänger 3 auf der rechten Seite zum Erfassungsbereich 5 liegen. Die Haupteinstrahlrichtung der Empfängeranordnung und damit sowohl des Photoempfängers 4 auf der linken, wie auch des Photoempfängers 3 auf der rechten Seite gemäß Zeichnungsdarstellung liegt in der Scankegel-Ebene senkrecht zu dem Kegel oder besser dem Lichtband bzw. parallel zur Ebene des Objektes 13. Die reemittierte Strahlung 6 trifft somit nicht bzw. im Streubereich nur zu einem vernachlässigbar kleinen Prozentsatz auf die Sensoroberflächen der Empfängeranordnung 3, 4. Die beiden Photoempfänger der Empfängeranordnung 3, 4 kennzeichnen sich durch einen breitkegeligen Öffnungswinkel der aus dem Erfassungsbereich 5 dorthin reflektierten Strahlung 15. Abschirmungen 16 sorgen darüber hinaus für eine Begrenzung des Rückstrahlungsbereiches der reemittierten Laserstrahlen. Jede der photoelektrischen Sensoren der Empfängeranordnung 3, 4 besteht praktisch aus jeweils einer Sammellinse 17 oder einer entsprechenden kumulierenden Linsenanordnung und einer Photodiode 3' bzw. 4'.

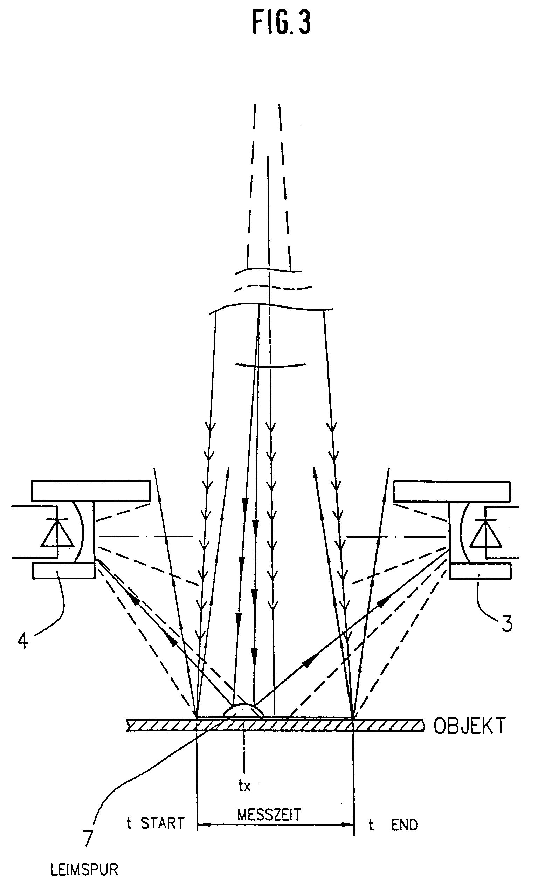

In Fig. 3 ist die Wirkung einer im Erfassungsbereich 5 auf die Oberfläche des Objektes 13 aufgebrachten Leimspur 7 dargestellt, von der aus das auffallende Laserlicht sowohl in der Kegelebene als auch von jeder der Seitenflanken zu der Empfängeranordnung 3, 4 reflektiert wird. Zufolge des zeitlich aufeinanderfolgenden Abtastvorganges zwischen den beiden Seitenflanken der Leimspur 7 erscheinen die etwa einer Gaußschen Glockenverteilung entsprechenden Reflexionspeaks in den Einstrahlbereichen der linken und rechten Photodioden der Empfängeranordnung 3, 4 hintereinander zeitversetzt, wobei die zeitliche Versetzung von der Abtastfrequenz vorgegeben wird.

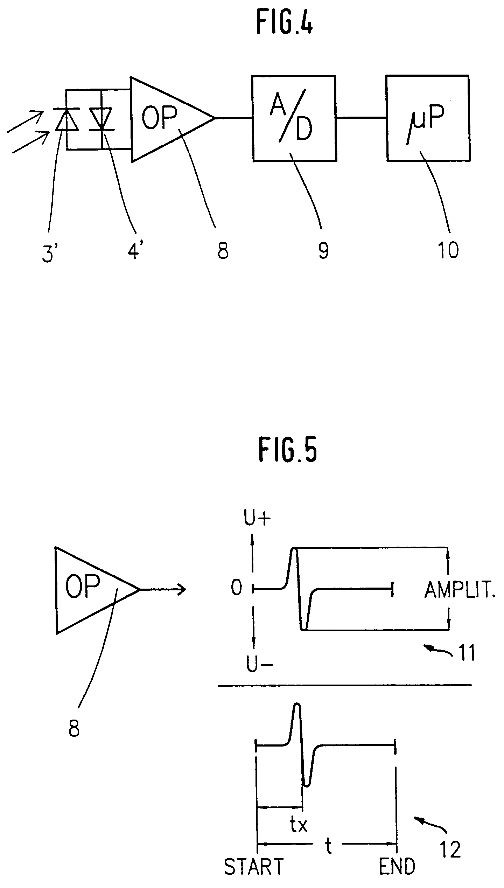

Fig. 4 zeigt die erfindungsgemäß diametrale Verschaltung der Dioden 3', 4', deren Ausgänge an die beiden Eingänge eines Operationsverstärkers 8 gelegt sind, der seinerseits an einen Zentralrechner 10 angeschlossen ist. Hier erfolgt die Verarbeitung der auftreffenden Signale in einer Form, daß der kontinuierliche Abtastvorgang und damit Spurauftragungsverlauf dann unterbrochen wird, wenn die Auftragung der Leimspur 7 nicht in Übereinstimmung mit einem hierfür vorgegebenen Muster erfolgt. Durch die diametrale Verschaltung der Dioden 3', 4' wird erreicht, daß bei energetisch gleichstarken Signalen sich die Wirkung der Reflexionspeaks zu beiden Seiten der Leimspur 7 aufheben, so daß am Ausgang des Operationsverstärkers 8 kein Signal ansteht. Störende Fremdlichteinflüsse wie Umgebungsstrahlung od.dgl. sind bei dieser Schaltungsanordnung ebenso kompensiert wie ansonsten auftretende Meßfehler durch Rückstrahlung der Lichtquelle oder durch objektbedingte Oberflächenstrukturen bzw. Einfärbungen.

Mit der schematischen Darstellung gemäß Fig. 5 soll noch gezeigt werden, daß der Amplitudenwert des Signalpiks der Reflexionsstrahlung eine quantitative Bewertung der Leimspurstärke erlaubt. Wie dargestellt, ergibt sich im Spannungs/Zeitdiagramm 11 für die linke und rechte Reflexionsseite der Leimspur 7 je eine gleiche Peakhöhe; der Zeitpunkt tx entspricht, wie aus Fig. 3 ersichtlich, der Mitte, also der maximalen Höhe der Leimspur 7. Die Ansteuerung der Ablenkvorrichtung 2 erfolgt mittels einer von einem Generator vorgegebenen Frequenz, so daß der Zeitpunkt tx für jeden Abtastvorgang über die Länge des Erfassungsbereiches 5, also zwischen der Startzeit einer Abtast-Halbperiode und ihrem Umkehr- bzw. Endpunkt auf der gegenüberliegenden Seite des Erfassungsbereiches zur Positionsbestimmung der Leimspur entlang der Linie 5 herangezogen werden kann.

Über die Bestimmung der Parameter Höhe und Breite der rautenförmigen Leimauftragung läßt sich bei entsprechender Programmierung des Rechners 10 auch das Volumen des Spurauftrages ermitteln und, falls gewünscht, kontinuierlich oder diskontinuierlich registrieren.

## Patentansprüche

1. Verfahren zum kontinuierlichen Abtasten und Überprüfen von Spurauftragungen auf einer bewegten Unterlage oder dergleichen Objekt, beispielsweise einer oder mehrerer aufzutragenden Leimspuren auf einem zu faltenden Schachtelrohling,
dadurch **gekennzeichnet,**
daß ein auf Objektentfernung fokussierter Lichtstrahl über mindestens eine periodische Ablenkvorrichtung (2) senkrecht auf dem Objekt (13) und senkrecht zur Bewegungsrichtung des Spurauftrages (7) gerichtet abgebildet wird und eine mit ihrer Haupteinstrahlungsrichtung im Winkel zur Objektoberfläche ausgerichtete Empfängeranordnung (3, 4) mit breitkegeligem Öffnungswinkel optoelektronisch die reflektierte Strahlung beidseitig des Spurauftrages zeitversetzt empfängt und die empfangenen Signale miteinander vergleicht.

2. Verfahren nach Anspruch 1,
dadurch gekennzeichnet, daß die Abtastung weitgehend trägheitslos vorgenommen wird.

3. Verfahren nach Anspruch 1,
dadurch gekennzeichnet, daß die periodische Ablenkung des Lichtstrahles mit hoher Frequenz erfolgt, wobei diese in Form einer beidseitig begrenzten Lichtlinie auf der Unterlage abgebildet wird.

4. Verfahren nach Anspruch 1,
dadurch gekennzeichnet, daß ein Winkel von annähernd 90° zwischen Haupteinstrahlungsrichtung der Empfängeranordnung und fokussierendem Lichtstrahl der Lichtquelle eingestellt wird.

5. Verfahren nach Anspruch 1,
dadurch gekennzeichnet, daß als Lichtquelle eine Laserlichtquelle verwendet wird.

6. Verfahren nach Anspruch 1,
dadurch gekennzeichnet, daß der Abstand zwischen periodischer Ablenkvorrichtung und Objektebene möglichst groß gewählt wird.

7. Vorrichtung zur Durchführung des Verfahrens nach mindestens einem der Ansprüche 1 bis 6, bestehend aus
einer Lichtquelle (1) zur Erzeugung eines fokussierten Lichtstrahles,
mindestens einer Ablenkvorrichtung (2) im Strahlengang der Lichtquelle, mit der der Lichtstrahl periodisch in vorgebbar kleinen Winkelbereichen zu einer Linienform abgelenkt ist,
einer photoelektrischen Empfängervorrichtung (3, 4), die beidseitig und oberhalb zum Spurauftrag (7) angeordnet ist, und
einer Auswertelektronik (3',4', 8, 9, 10), die die reflektierte Strahlung einer Seite des Spurauftrages (7) mit der reflektierten Strahlung der anderen Seite des Spurauftrages (7) vergleicht unter Berücksichtigung der Zeitversetzten Abtastung quer zum Spurauftrag (7).

8. Vorrichtung nach Anspruch 7,
dadurch gekennzeichnet, daß die nach dem Scannerprinzip arbeitende Abtastvorrichtung (2) aus wenigstens einem Resonanz-Frequenschwinger und/oder Polygonspiegel besteht.

9. Vorrichtung nach Anspruch 7,
dadurch gekennzeichnet, daß die Empfängeranordnung (3, 4) aus zwei beidseitig zu dem oder den Spurauftrag(en) angeordneten photoelektrischen Sensoren besteht.

10. Vorrichtung nach Anspruch 9,
dadurch gekennzeichnet, daß die Haupteinstrahlungsrichtung der Empfängeranordnung (3, 4) wenigstens annähernd parallel zur Oberfläche des Objektes (13) angeordnet ist.

11. Vorrichtung nach Anspruch 7,
dadurch gekennzeichnet, daß die Auswertelektronik diametral verschaltete Dioden (3', 4') aufweist, die elektrisch gleichstarke Signale von den beiden Seiten der Spurauftragung (7) kompensieren.

12. Vorrichtung nach Anspruch 7,
dadurch gekennzeichnet, daß eine lange Wegstrecke zwischen Lichtquelle (1) und Oberfläche des die Spur (7) tragenden Objektes (13) vorgegeben ist.

## Claims

1. Method for continuous scanning and checking of track applications on a moving substrate or object of this type, for example of one or more tracks of glue on a foldable box blank, **characterised in that** a lightbeam focused on an object range is imaged to be oriented via at least one periodic deflecting device (2) perpendicularly to the object (13) and perpendicularly to the movement direction of the track application (7), and a receiver arrangement (3, 4) with broad conical opening angle, which is aligned with its main inward radiation direction at an angle to the object surface, opto-electronically receives with a temporal offset reflected radiation on both sides of a track application and compares the received signals.

2. Method according to Claim 1, **characterised in that** scanning is substantially carried out free of inertia.

3. Method according to Claim 1, **characterised in that** periodic deflection of the lightbeam is carried out at high frequency, and this is imaged in the form of a light line which is defined on both sides on the substrate.

4. Method according to Claim 1, **characterised in that** an angle of virtually 90° is set between main entry direction of the receiver arrangement and focusing lightbeam of the light source.

5. Method according to Claim 1, **characterised in that** the light source is a laser light source.

6. Method according to Claim 1, **characterised in that** the distance between periodic deflecting device and object plane is chosen to be as great as possible.

7. Device for carrying out the process according to at least one of Claims 1 to 6, comprising
a light source (1) for generating a focused lightbeam,
at least one deflecting device (2) in the beam path of the light source by means of which the lightbeam is periodically deflected in specified small angular ranges into a line form,
a photo-electric receiver device (3, 4), which is arranged on both sides and at the top for track application (7), and
an evaluation electronics (3', 4', 8, 9, 10) which compares reflected radiation of one side of a track application (7) with the reflected radiation of the other side of a track application (7) whilst taking into consideration the temporally offset scanning transversely to a track application (7).

8. Device according to Claim 7, **characterised in that** the scanning device (2), which operates according to the scanning principle, is composed of at least one resonance frequency oscillator and/or polygon mirror.

9. Device according to Claim 7, **characterised in that** the receiver arrangement (3, 4) is composed of two photo-electric sensors arranged on both sides of the track application(s).

10. Device according to Claim 9, **characterised in that** the main inward radiation direction of the receiver arrangement (3, 4) is at least virtually parallel with the surface of the object (13).

11. Device according to Claim 7, **characterised in that** the evaluation electronics comprises diametrally connected diodes (3', 4') which compensate signals of identical electrical strength from both sides of the track application (7).

12. Device according to Claim 7, **characterised in that** a long path is provided between light source (1) and surface of the object (13) which carries the track (7).

## Revendications

1. Procédé pour balayer et contrôler en continu des dépôts en forme de cordons sur un support mobile ou un objet analogue, par exemple d'un ou de plusieurs cordons de colle devant être déposés sur une ébauche de boîte devant être pliée,
caractérisé en ce que l'image d'un faisceau de lumière focalisé sur la distance objet est formée par l'intermédiaire d'au moins un dispositif de déviation périodique (2), en étant dirigée perpendiculairement sur l'objet (13) et perpendiculairement à la direction de déplacement du dépôt en forme de cordon (7), et qu'un dispositif de réception (3,4), dont la direction principale de rayonnement fait un angle par rapport à la surface de l'objet, et possédant un angle d'ouverture correspondant à un cône large, reçoit par voie optoélectronique le rayonnement réfléchi, des deux côtés du dépôt en forme de cordon, d'une manière décalée dans le temps et compare entre eux les signaux reçus.

2. Procédé selon la revendication 1, caractérisé en ce que le balayage est exécuté dans une large mesure sans inertie.

3. Procédé selon la revendication 1, caractérisé en ce que la déviation périodique du faisceau de lumière s'effectue avec une fréquence élevée, l'image de ce faisceau étant formée, sous la forme d'une ligne lumineuse limitée des deux côtés, sur le support.

4. Procédé selon la revendication 1, caractérisé en ce qu'on règle un angle égal approximativement à 90° entre la direction principale de rayonnement du dispositif de réception et le faisceau de lumière de focalisation de la source de lumière.

5. Procédé selon la revendication 1, caractérisé en ce qu'on utilise comme source de lumière une source de lumière laser.

6. Procédé selon la revendication 1, caractérisé en ce qu'on choisit aussi grande que possible la distance entre le dispositif de balayage périodique et le plan objet.

7. Dispositif pour la mise en oeuvre du procédé selon au moins l'une des revendications 1 à 6, caractérisé par
une source de lumière (1) pour produire un faisceau de lumière focalisé,
au moins un dispositif de déviation (2) situé dans le trajet du rayonnement de la source de lumière et avec lequel le faisceau de lumière est dévié périodiquement dans des plages angulaires de petite taille pouvant être prédéterminées, selon une forme linéaire,
un dispositif de réception photoélectrique (3,4), qui est disposé des deux côtés et au-dessus du dépôt en forme de cordon (7), et
un système électronique d'exploitation (3',4',8,9,10), qui compare le rayonnement réfléchi d'un côté du dépôt en forme de cordon (7) au rayonnement réfléchi de l'autre côté du dépôt en forme de cordon (7), en tenant compte du balayage décalé dans le temps, transversal par rapport au dépôt en forme de cordon (7).

8. Dispositif selon la revendication 7, caractérisé en ce que le dispositif de balayage (2), qui travaille selon le principe du scanner, est constitué par au moins un oscillateur travaillant à la fréquence de résonance et/ou d'un miroir polygonal.

9. Dispositif selon la revendication 7, caractérisé en ce que le dispositif de réception (3,4) est constitué de deux capteurs photoélectriques, qui sont disposés des deux côtés du ou des dépôts en forme de cordons.

10. Dispositif selon la revendication 9, caractérisé en ce que la direction principale de rayonnement du dispositif de réception (3,4) est au moins approximativement parallèle à la surface de l'objet (13).

11. Dispositif selon la revendication 7, caractérisé en ce que le système électronique d'exploitation comporte des diodes (3',4') câblées diamétralement, qui compensent des signaux électriques de même intensité des deux côtés du dépôt en forme de cordon (7).

12. Dispositif selon la revendication 7, caractérisé en ce qu'une longue section de déplacement est prédéterminée entre la source de lumière (1) et la surface de l'objet (13) portant le cordon (7).
